Europäisches Patentamt

European Patent Office

Office européen des brevets

(11) Publication number: **0 184 426**
**B1**

(12) **EUROPEAN PATENT SPECIFICATION**

(45) Date of publication of patent specification: **16.01.91**

(51) Int. Cl.⁵: **B 60 P 1/34**

(21) Application number: **85308792.2**

(22) Date of filing: **03.12.85**

(54) An improved cargo trailer.

(30) Priority: **04.12.84 ES 538253**

(43) Date of publication of application:
**11.06.86 Bulletin 86/24**

(45) Publication of the grant of the patent:
**16.01.91 Bulletin 91/03**

(84) Designated Contracting States:
**AT BE CH DE FR GB IT LI LU NL SE**

(56) References cited:
**FR-A-1 290 257**
**FR-A-2 464 156**
**GB-A-1 401 949**
**US-A-3 907 364**

**PATENT ABSTRACTS OF JAPAN, vol. 8, no. 267
(M-343)1704r, 7th December 1984; & JP-A-59
140 136 (SHINMEIWA KOGYO K.K.) 11-08-1984**

(73) Proprietor: **Abascal Zuloaga, José Manuel**
**Valle de Egües 6**
**31004 Pamplona (ES)**

(72) Inventor: **Abascal Zuloaga, José Manuel**
**Valle de Egües 6**
**31004 Pamplona (ES)**

(74) Representative: **Heath, Derek James et al**
**BROMHEAD & CO. 19 Buckingham Street**
**London WC2N 6EF (GB)**

Courier Press, Leamington Spa, England.

## Description

This invention relates to a cargo trailer comprising a chassis with at least one set of wheels and a load assembly joined to the chassis, the load assembly being in the form of an over-chassis and/or load container, wherein a scissor arm arrangement composed of two arms pivotally joined to one another at one end has one arm pivotally attached at its other end to the load assembly and the other arm pivotally attached at its other end to the chassis.

A trailer of this construction is described in FR-A-1 290 257, the scissor arm arrangement shown therein being such as to facilitate the transfer of goods from one vehicle to another or from a vehicle to a storage area or vice versa. However, one of the problems that still arises is that only angular and/or linear motion is required of the trailer chassis in all the working positions of the trailer and the load, and that the wheels of the trailer should never lose contact with the ground.

It is therefore an aim of the present invention to ensure that the centre of gravity of the trailer or semi-trailer shifts very little from one position to another, even when such trailer or semi-trailer adopts one or another working position, by arranging for the chassis and the wheels to undergo minimal travel.

With this aim in view, the invention is directed to a cargo trailer which is characterised in that a fluid operated cylinder is pivotally linked by at least one of its ends to one of the ends of the scissor arm arrangement and there is at least one anchorage point on the rear portion of the load assembly and at least one anchorage point on the rear portion of the chassis and that anchoring means are pivotally attached to these anchorage points, the anchoring means comprising an arm that is pivoted at one end to the chassis and is pivotable at the other end to the load assembly anchor point, and a single or double-acting cylinder that is pivotally joined at its ends to an intermediate portion of the arm and to the trailer chassis respectively.

Two examples of cargo trailers in accordance with the invention are shown in the accompanying drawings, in which;

Figure 1 is an enlarged view of a positioning device on a draw bar for towing a trailer;

Figure 2 is a side view of a semi-trailer with its load container approaching a loading or unloading height, i.e., unloading upon another vehicle such as a lorry or trailer, or upon a stock pile;

Figure 3 is another side view of the same semi-trailer but with the load container shown in the fully tipped position; and

Figure 4 is a side view of another form of cargo trailer.

Both of the trailers shown in the drawings are provided with draw bars (81) for towing by a tractor unit, the tractor in Figure 4 having a fixed support (82) on the draw bar which is withdrawn whilst the semi-trailer is in motion and placed at the towing hook height so as to allow the draw bar (81) to engage with tow hooks on different kinds of tractor.

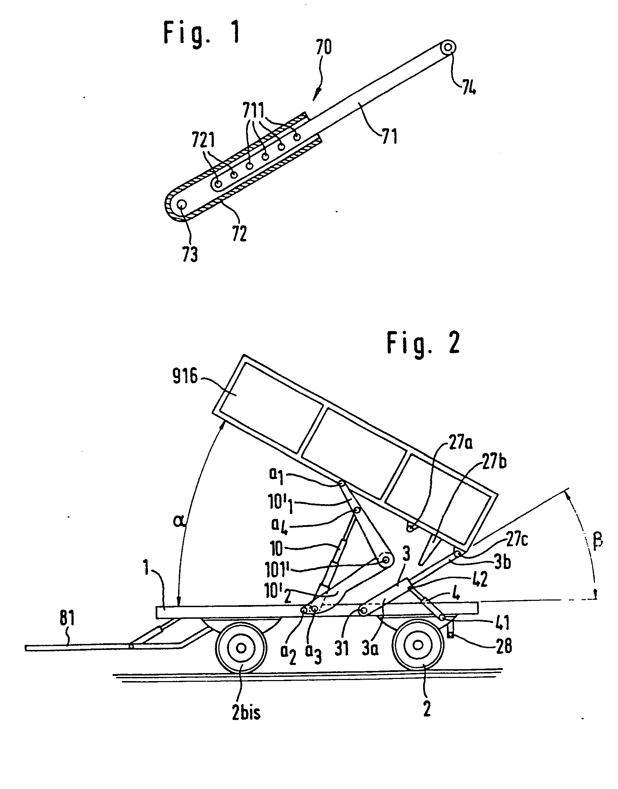

Figure 4 provides, moreover, an enlarged view of the travelling anchorage (17) between the chassis (1) and the load container (16). For the travelling position and other positions where the trailer is tipped, except for those in which the cargo container (16) is separated from the chassis (1), travelling anchor point (17) is positioned at the end attachment (27c) on the load container (16). In the fully tipped position, where the container stands at right angles to the ground, as for example in Figure 1, travelling anchor position (17) is located at the inner attachment (27a) of said load container (16). Travelling anchor position (17) is able to slide upon the chassis (1) and is secured thereto by means of pins (20).

The purpose of the over-chassis is to allow a range of different load containers (16) to be used. Once the appropriate load container (16) for the purpose has been chosen, it is rigidly secured to the over-chassis. The over-chassis and the load container (16) shall hereinafter be called the load assembly (916).

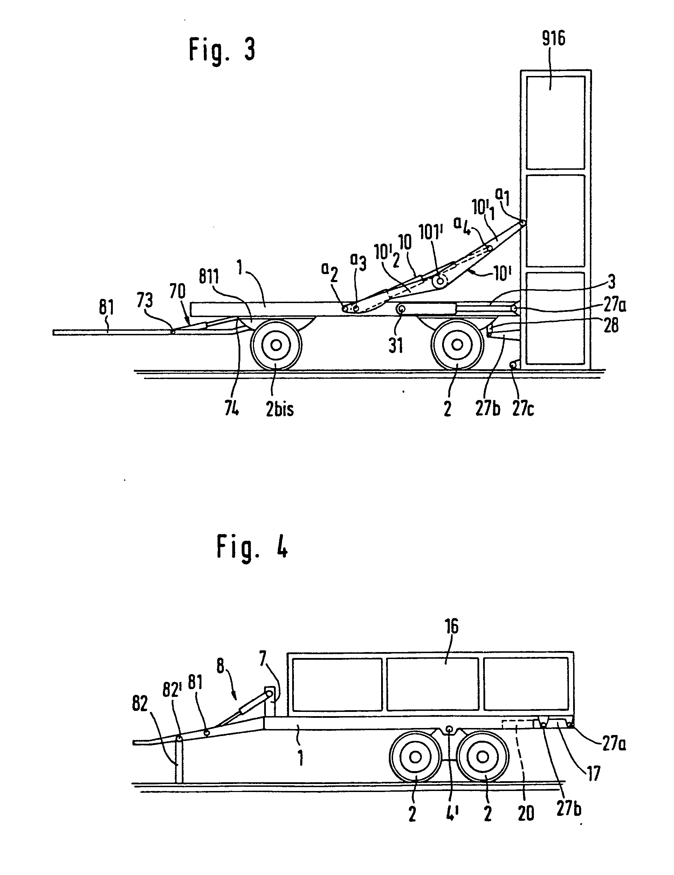

The trailer or semi-trailer shown in Figures 2 and 3 is provided with a chassis (1), with an over-chassis optionally, and in any event with a load container (16), together with one or two sets of wheels (2), (2 bis) according to whether the equipment is a semi-trailer or a trailer proper, and a draw bar (81) for hooking up to a tractor unit.

Chassis (1) and load assembly (916) are coupled to one another by means of a scissor arm arrangement (10') which is comprised of two arms (10'$_1$) and (10'$_2$) that are pivotally joined together (101'), where arm (10'$_1$) is pivoted at (a$_1$) to load assembly (916), while arm (10'$_2$) is pivoted to the chassis at (a$_2$).

A fluid operated cylinder (10) is fitted onto said scissor arm arrangement (10') and pivoted thereto at (a$_3$) and (a$_4$). When said cylinder (10) exerts a thrust upon either of arms (10'$_1$), it causes load assembly (916) to swivel about pivots (27) with chassis (1), and thus make load assembly (916) adopt the tipped position with respect to chassis (1).

Hydro-pneumatic cylinder (10) provides a telescopic arrangement whereby with a minimal space requirement, all working positions can be obtained between the load container (16) and the over-chassis or load container (16) alone if appropriate with respect to the chassis (1).

The load assembly (916) possesses three fixed anchorage points (27a), (27b), (27c) at its rear, of which the middle one (27b) is the highest and takes the pivotal joints.

Chassis (1) possesses at its rear an arm (3) which is pivoted at (31) to chassis (1), and is comprised of two parts (3a) and (3b) that are telescopically assembled together.

A second fluid operated cylinder (4) is also provided, and is pivoted at (41) to the chassis (1), and at (42) to the arm (3).

Chassis (1) also embodies a fixed anchorage point (28) which is prolonged towards the bottom of same, and is located at the back of the rear set of wheels (2).

In the above structural arrangement, the most common working positions for which the ensuing description is given, are as follows:

The travelling position, as depicted in Figure 1. When the load assembly (916) lies horizontal and is resting upon the chassis (1), arm (3) is held horizontal, and the end of its portion (3b) is pivoted at (27c) to the load assembly (916). The scissor arrangement (10') and fluid operated cylinder (10) are held in the retracted position. When draw bar (81) on the trailer or semi-trailer is hooked up, the tractor unit draws upon same in order to convey said trailer or semi-trailer in the loaded or unloaded condition from one location to another. In this position, fixed pivot (27a) is free, fixed pivot (27b) may be either free or coupled to fixed anchorage (28), and fixed pivot (27c) is attached to arm (3), although fixed pivot (27a) may also become attached, in which case fixed pivot (27c) is free.

The lifting position for the purpose of tipping onto another vehicle, onto another trailer, or onto a stock pile, as depicted in Figure 2. With portion (3b) of arm (3) pivoted to fixed anchorage (27c), and with anchorage (27b) free from anchorage (28), cylinders (4) and (10) are operated to respectively make arm (3) swivel about its pivot (31) onto the chassis, and open the scissor arm arrangement (10'). The slope angle "α" will obviously depend upon the width to which scissor arms (10') open, and angle β through which arm (3) has swivelled.

In this position, fixed pivots (27a) and (27b) are free.

The full tipped position at right angles or 90 degrees to the ground, as depicted in Figure 3. With portion (3b) of arm (3) pivoted at (27a), and with fixed anchorage (28) pivoted at (27b), cylinder (10) is operated thus opening the scissor arm arrangement (10') until the back face of the load assembly (916) rests upon the ground. To return to the travelling position, cylinder (10) is relieved of its load, the tip of portion (3b) on arm (3) is engaged upon fixed anchorage (27a), and cylinder (4) is operated to cause arm (3) to swivel about its pivot (31) on the chassis and thus afford an initial tipping thrust. The remainder of the tipping motion of the load assembly is brought about either through its own weight, if cylinder (10) is a single acting cylinder, or with the aid of said cylinder (10) if it is a double acting cylinder.

In the case of the trailer as shown in Figure 4, chassis (1) can turn with respect to pivot (4') in the set of wheels (2), and so there is no need of any assistance for the various load positions of cylinder (4), and instead use is made of a head (7) attached to chassis (1), to which a hydraulic cylinder (8) is pivotally joined, the opposite end of same being secured to the tractor unit draw bar (81).

The use of this cylinder makes differing positions of chassis (1) possible.

In the case of the semi-trailer (Figures 2 and 3), the draw bar (81) on the trailer or semi-trailer is pivoted at (811) to the set of steering wheels (2 bis) which are capable of turning in a horizontal plane.

Draw bar (81) is moreover associated with the main chassis (1) by means of a device (70) which is capable of positioning the draw bar assembly (81) and set of wheels (2 bis) in relation to said main chassis (1) to fix it, or to release them and thus allow the aforementioned motion of the steering wheels (2 bis) and the draw bar (81) in the horizontal plane.

Said device (70) (Figure 1) is comprised of two bodies (71) and (72), which are assembled telescopically one upon the other. Body (71) is pivoted at its free end (74) to the trailer or semi-trailer chassis (1). Body (72) is pivoted at its free end (73) to the draw bar (81).

The above-mentioned assembly may equally be mounted the opposite way about without detracting from the essential features of the invention.

Body (71) possesses a plurality of holes (711) arranged in line with one another.

Body (72) possesses a plurality of holes (721) arranged in line with one another.

When pairs of holes (711) and (721) are placed opposite each other and a pin is inserted through them, set of wheels (2 bis) and the draw bar (81) are located in position with respect to chassis (1).

Without altering the essential features of the invention in any way, device (70) may be fluid operated by means of a hydraulic or pneumatic cylinder, and here it is necessary to pivot its body (72) to the draw bar (81) at (73), and its plunger to the chassis (1) at (74), or vice-versa.

## Claims

1. An improved cargo trailer comprising a chassis (1) with at least one set of wheels (2) and a load assembly (916) joined to the chassis, the load assembly being in the form of an over-chassis and/or load container (16), wherein a scissor arm arrangement (10') composed of two arms pivotally joined to one another at one end has one arm (10'₁) pivotally attached at its other end to the load assembly (916) and the other arm (10'₂) pivotally attached at its other end to the chassis (1), characterised in that a fluid-operated cylinder (10) is pivotally linked by at least one of its ends to one of the ends of the scissor arm arrangement (10') and there is at least one anchorage point (27c) on the rear portion of the load assembly (916) and at least one anchorage point (41) on the rear portion of the chassis (1) and that anchoring means (3, 3b, 4) are pivotally attached to these anchorage points, the anchoring means comprising an arm (3) that is pivoted at one end to the chassis (at 31) and is pivotable at the other end to the load assembly anchor point (27c), and a single or double-acting cylinder (4) that is pivotally joined at its ends to an intermediate portion of the arm (3) and to the trailer chassis (1) respectively.

2. An improved cargo trailer in accordance with claim 1, characterised in that the arm (3) comprises telescopically-assembled parts.

3. An improved cargo trailer in accordance with claim 1 or claim 2, characterised in that the load assembly (916) has three anchorage points (27a, 27b, 27c) of which the middle one is lower than the others.

4. An improved cargo trailer in accordance with claim 3, characterised in that the chassis (1) has an extra anchorage at the rear underside which can be joined to the middle anchorage point (27b) on the load assembly (916) when the position of the chassis (1) with respect to the load assembly is perpendicular.

5. An improved cargo trailer in accordance with claim 1, characterised in that the anchoring means (3, 3b, 4) are a travelling component that slides on the chassis (1).

6. An improved cargo trailer in accordance with claim 1, characterised in that it comprises a front draw bar (81) to which a tractor unit is coupled and which is pivoted to a set of steering wheels (2bis) in such a way that the draw bar and steering wheel assembly can turn at an angle in the horizontal plane, and a positioning device (70) which, being pivoted to draw bar (81) and the trailer or the semi-trailer chassis, allows the draw bar and steering wheel assembly either to be secured in the working position to the trailer chassis or to be freed therefrom in the trailer travelling or working position, but with a draw bar coupled to a tractor unit.

7. An improved cargo trailer in accordance with claim 6, characterised in that the positioning device (70) is a fluid-operated cylinder, the plunger of which is pivoted to the main chassis (1) and the body of which is pivoted to the trailer draw bar or vice-versa.

## Patentansprüche

1. Fahrzeuganhänger für Beladezwecke mit einem Chassis (1) mit mindestens einem Satz von Rädern (2) und einer Ladeeinheit (916), die mit dem Chassis verbunden ist und die Form eines Überchassis und/oder Ladebehälters (16) besitzt, wobei eine Scherenarmanordnung (10'), die sich aus zwei Armen zusammensetzt, welche an einem Ende gelenkig miteinander verbunden sind, einen Arm (10'₁), der an seinem anderen Ende gelenkig an der Ladeeinheit (916) befestigt ist, und einen anderen Arm (10'₂) aufweist, der an seinem anderen Ende gelenkig am Chassis (1) befestigt ist, dadurch gekennzeichnet, daß ein strömungsmittelbetätigter Zylinder (10) an mindestens einem seiner Enden mit mindestens einem der Enden der Scherenarmanordnung (10') gelenkig verbunden ist, daß mindestens ein Verankerungspunkt (27c) am rückseitigen Abschnitt der Ladeeinheit (916) und mindestens ein Verankerungspunkt (41) am rückseitigen Abschnitt des Chassis (1) vorgesehen ist und daß Verankerungseinrichtungen (3, 3b, 4) gelenkig an diesen Verankerungspunkten befestigt sind und einen Arm (3), der an einem Ende am Chassis (bei 31) angelenkt und am anderen Ende mit dem Verankerungspunkt (27c) der Ladeeinheit gelenkig verbindbar ist, sowie einen einfach wirkenden oder doppelt wirkenden Zylinder (4) aufweisen, der an seinen Enden gelenkig mit einem Zwischenabschnitt des Armes (3) und dem Anhängerchassis (1) verbunden ist.

2. Anhänger nach Anspruch 1, dadurch gekennzeichnet, daß der Arm (3) teleskopartig zusammengebaute Teile umfaßt.

3. Anhänger nach Anspruch 1 oder 2, dadurch gekennzeichnet, daß die Ladeeinheit (916) drei Verankerungspunkte (27a, 27b, 27c) besitzt, von denen der mittlere niedriger als die anderen angeordnet ist.

4. Anhänger nach Anspruch 3, dadurch gekennzeichnet, daß das Chassis (1) einen zusätzlichen Anker an der hinteren Unterseite besitzt, der mit dem mittleren Verankerungspunkt (27b) an der Ladeeinheit (916) verbunden werden kann, wenn das Chassis (1) relativ zur Ladeeinheit eine senkrechte Stellung einnimmt.

5. Anhänger nach Anspruch 1, dadurch gekennzeichnet, daß die Verankerungseinrichtungen (3, 3b, 4) ein sich bewegendes Teil sind, das auf dem Chassis (1) gleitet.

6. Anhänger nach Anspruch 1, dadurch gekennzeichnet, daß er eine vordere Zugstange (81) aufweist, die an eine Zugmaschineneinheit gekoppelt ist und an einen Satz von lenkbaren Rädern (2 bis) derart angelenkt ist, daß die Zugstange und die Einheit aus den lenkbaren Rädern in der Horizontalebene um einen Winkel gedreht werden kann, und eine Positionierungsvorrichtung (70), die mit der Zugstange (81) und dem Chassis des Anhängers oder Halbanhängers gelenkig verbunden ist und gestattet, daß die Zugstange und die Einheit der lenkbaren Räder in der Arbeitsstellung am Chassis des Anhängers befestigt oder in der Fahrstellung oder Arbeitsstellung des Anhängers hieraus befreit werden kann, wenn eine Zugstange mit einer Zugmaschineneinheit gekoppelt ist.

7. Anhänger nach Anspruch 6, dadurch gekennzeichnet, daß die Positionierungsvorrichtung (70) ein strömungsmittelbetätigter Zylinder ist, dessen Kolben mit dem Hauptchassis (1) und dessen Gehäuse mit der Zugstange des Anhängers gelenkig verbunden ist oder umgekehrt.

## Revendications

1. Une remorque de chargement améliorée comprenant un châssis (1) avec au moins un jeu de roues (2) et un ensemble de charge (916) assemblé au châssis, l'ensemble de charge ayant la forme d'un châssis supérieur et/ou container de charge (16), où un système de bras articulé (10') composé de deux bras assemblés avec pivotement d'un côté à un bras (10'₁) fixé avec pivotement de son autre côté à l'ensemble de charge (916) et l'autre bras (10'₂) fixé avec pivotement de son autre côté au châssis (1), caractérisée en ce qu'un vérin à commande hydraulique ou pneumatique (10) est relié avec pivotement par au moins une de ses extrémités à l'une des extrémités du système de bras articulé (10') et il y a au moins un point d'ancrage (27c) sur la partie arrière de l'ensemble de charge (916) et au moins un point d'ancrage (41) sur la partie arrière du châssis (1), et en ce que des moyens d'ancrage (3, 3b, 4) sont fixés avec pivotement à ces points d'ancrage, les moyens d'ancrage comprenant un bras (3) qui pivote d'un côté sur le châssis (en 31) et peut pivoter de l'autre côté au point d'ancrage de l'ensemble de charge (27c), et un vérin simple ou double effet (4) qui est assemblé avec pivotement à ses extrémités sur une partie intermédiaire du bras (3) et sur le châssis de la remorque (1) respectivement.

2. Une remorque de chargement améliorée conforme à la revendication 1, caractérisée en ce que le bras (3) comprend des parties assemblées télescopiquement.

3. Une remorque de chargement améliorée conforme à la revendication 1 ou à la revendication 2, caractérisée en ce que l'ensemble de charge (916) a trois points d'ancrage (27a, 27b, 27c), le point du milieu étant plus bas que les autres.

4. Une remorque de chargement améliorée conforme à la revendication 3, caractérisée en ce que le châssis (1) a un ancrage supplémentaire à l'arrière, dessous, qui peut être assemblé au point d'ancrage du milieu (27b) sur l'ensemble de charge (916) lorsque la position du châssis (1) par rapport à l'ensemble de charge est perpendiculaire.

5. Une remorque de chargement améliorée conforme à la revendication 1, caractérisée en ce que les moyens d'ancrage (3, 3b, 4) sont constitués par un élément mobile qui coulisse sur le châssis (1).

6. Une remorque de chargement améliorée conforme à la revendication 1, caractérisée en ce qu'elle comprend une barre d'attelage avant (81) à laquelle est accouplé un groupe tracteur et qui pivote sur un jeu de roues directrices (2 bis) de telle sorte que l'ensemble de la barre d'attelage et des roues directrices puisse tourner d'un certain angle dans le plan horizontal, et un dispositif de positionnement (70) qui, en pivotant sur la barre d'attelage (81) et la remorque ou le châssis de la semi-remorque, permet à l'ensemble de la barre d'attelage et des roues directrices soit d'être fixé en position de travail sur le châssis de la remorque soit d'en être libéré en position de déplacement ou de travail de la remorque, mais avec une barre d'attelage accouplée au groupe tracteur.

7. Une remorque de chargement améliorée conforme à la revendication 6, caractérisée en ce que le dispositif de positionnement (70) est un vérin à commande hydraulique ou pneumatique, dont le piston pivote sur le châssis principal (1) et dont le corps pivote sur la barre d'attelage de la remorque ou vice-versa.

**Fig. 1**

**Fig. 2**

Fig. 3

Fig. 4